# EUROPEAN PATENT SPECIFICATION

(11) **EP 4 101 725 B1**
(45) Date of publication and mention of the grant of the patent: **29.05.2024**
(21) Application number: 21762989.8
(22) Date of filing: 01.06.2021
(51) Int. Cl.: B60T 7/22, B60T 13/66, B60T 17/22, B61H 5/00, B61H 13/34, B61L 3/04

(54) **BRAKING SYSTEM FOR CONTINENTAL RAILROAD VEHICLE**
BREMSSYSTEM FÜR EIN KONTINENTALES SCHIENENFAHRZEUG
SYSTÈME DE FREINAGE POUR VÉHICULE FERROVIAIRE CONTINENTAL

(30) Priority: 21.04.2021 KR 20210051938
(43) Date of publication of application: 14.12.2022
(73) Proprietor: Korea Railroad Research Institute, Uiwang-si, Gyeonggi-do 16105 (KR)
(72) Inventor: MUN, Hyung-Suk, Seoul 04424 (KR)
(74) Representative: Petraz, Gilberto Luigi
(86) International application number: PCT/KR2021/006779
(87) International publication number: WO 2022/225093

(56) References cited:
- JP-A- H0 640 324
- KR-A- 20000 045 991
- KR-A- 20180 085 771
- KR-B1- 100 426 272
- KR-B1- 100 754 798

## Description

### Technical Field

The present invention is related to a braking system for a railroad car and, more particularly, a braking system for a railroad car, the braking system including both standard gauge and broad gauge distribution valves that are different types and, and being able to automatically supply a braking pneumatic pressure, which is suitable for braking systems that are applied in different ways in accordance with gauges, without stopping railroad cars by switching braking pneumatic pressure such that the braking pneumatic pressure is supplied to a distribution valve, which is used for a corresponding gauge of the different types of distribution valves, by movement of wheels at a gauge change section.

### Background Art

Recently, as the inter-Korean Railroad Connection Project has been accelerated, interest is increasing in plans for overcoming the gauge difference at the borders between the Korea railways using the standard gauge and the Russian railways using a broad gauge, and methods of transferring freight, changing trucks, designing a gauge-variable truck, etc. have been examined as those plans.

For example, an automatic gauge-adjustable wheelset has been disclosed in Korean Patent No. 10-0614613. The main technical configuration, as shown in FIG. 1, includes an axle 1, a wheel 2, a fixed cap 3 fixed to the axle 1, a locking member 4 fitted on the fixed cap 3 and moving the wheel 2 to the left and right by rotating on the axle, a flange 5 fitted on the right end of the fixed cap 3 and locking/unlocking the locking member 4, a spring holder 6 fitted on the left end of the fixed cap 3, and a compression spring 7 disposed between the flange 5 and the spring holder 6.

That is, according to the automatic gauge-adjustable wheelset of the related art, when a vehicle runs on a railroad having one kind of gauge, the flange disposed inside the wheel 2 is pushed toward the center of the axle 1 and fixed at the position by force of the compression spring 7 to fix the cap between wheels 2.

When the vehicle moves to a railroad having another gauge from the railroad having one kind of gauge, the flange 5 is pushed outward on the axle 1 by an unlocking rail and the locking device 4 is unlocked so that the position of the wheel 2 that has been fixed can be changed while the vehicle passes a ground switch facility with a release rail.

Korea railways using the standard gauge and the Russian railways using a broad gauge have in common in that they both use a braking system that uses pneumatic pressure, but are different in a braking pipe and the configuration of a distribution valve connected between cars. The difference in configuration of distribution valves causes a difference in braking time and braking pressure.

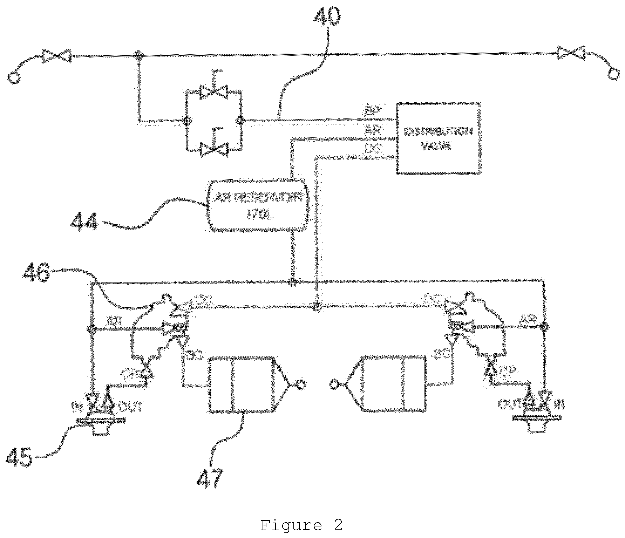

That is, a pneumatic braking system of common railroad cars, as shown in FIG. 2, may include a braking pipe BP connected to each car connected to a locomotive from main air tank on the locomotive, an auxiliary air tank 44 on each car, a distribution valve connected between the braking pipe 40 and the auxiliary air tank 44, a load sensor 45 connected to the auxiliary air tank 44 and the distribution valve, a variable load valve 46, a braking cylinder 47, etc. As described above, since there is a structural difference between the distribution valve of the braking system for a standard gauge used in Korea, etc. and the distribution valve of the braking system for a broad gauge used in Russia, etc., there are differences in the magnitude of pneumatic pressure that is generated in braking, the time for reaching the pneumatic pressure, etc. Japanese Patent Application JP H06 40324 A discloses a hydraulic brake device for rolling stock and method for controlling hydraulic brake device for rolling stock.

Railroad vehicles have to run on both of a standard-gauge railroad and a broad-gauge railroad, and a car for a broad-gauge railroad has to be connected to the front or rear of a car for a standard-gauge railroad in some cases. However, a braking system that can be used for both the standard gauge and the broad gauge has not been developed yet. Accordingly, there is a problem that two or more locomotives having two different braking systems, respectively, are necessary to simultaneously drive a car for the standard gauge and a car for the broad gauge.

### Disclosure of the invention

### Technical Problem

The present invention has been made in an effort to solve the problems described above and an objective of the present invention is to provide a braking system for a railroad car, the braking system including both standard gauge and broad gauge distribution valves that are different types and, and being able to convert a braking pneumatic pressure such that the braking pneumatic pressure can be supplied to a distribution valve, which is used for a corresponding gauge of the different types of distribution valves, by movement of wheels at a gauge change section.

Another objective of the present invention is to provide a braking system for a railroad car, the braking system making it possible to connect and simultaneously drive cars for different gauges without connecting an additional locomotive, and being able to automatically supply a braking pneumatic pressure suitable for braking systems that are applied in different ways in accordance with gauges even without stopping railroad cars.

### Technical Solution

In order to achieve the objectives of the present invention,
a braking system for a railroad car including a gauge-adjustable device being able to change positions of wheels at both sides through an unlocking rail and a braking system using pneumatic pressure, includes first and second distribution valves that are different types, and is configured to be able to selectively supply and discharge a braking pneumatic pressure to the first or second distribution valve in accordance with a gauge or a railroad on which the railroad car is driven.

The braking system may include a controller configured to control supply and discharge of a braking pneumatic pressure to the first or second distribution valve, in which the controller may be operated in response to movement of a wheel in a gauge change section.

The controller may include: a first controller disposed between a wheel of the railroad car and inlets of the first and second distribution valves; and a second controller disposed between the other wheel of the railroad car and outlets of the first and second distribution valves.

The first and second controllers may include: a switch unit mounted on a car frame and operating in response to movement of a wheel in a gauge change section; and a conversion member connected to the switch unit and passing a braking pneumatic pressure toward only any one of the first and second distribution valves.

The switch unit may include: a switch disposed on a car frame and being moved toward an axle by movement of a wheel in a gauge change section; and a link having an end connected to the switch and another end connected to the conversion member.

An insertion groove in which an upper end of a wheel is inserted may be formed in the switch, and bearings being in contact with both sides of the wheel may be disposed on both sides of the insertion groove.

A dove tail-shaped guide may protrude from a top of the switch, and a guide groove in which the guide is inserted may be formed on the car frame toward an axle.

The car frame may have a hinge-coupling portion supporting the link.

The conversion member may be moved through a divergence pipe diverging to the first and second distribution valves from a main air pipe of the braking system by operation of the switch unit to selectively open and close the divergence pipe connected to the first or second distribution valve.

The first and second controllers may include: a guide rail fixed to a railroad of a gauge change section; a switch unit disposed on a car frame and guided toward an axle by the guide rail; and a conversion member connected to the switch unit to pass a braking pneumatic pressure toward only one of the first and second distribution valves.

### Advantageous Effects

According to the present invention, the braking system includes both standard gauge and broad gauge distribution valves that are different types and, and converts a braking pneumatic pressure such that the braking pneumatic pressure is supplied to a distribution valve, which is used for a corresponding gauge of the two types of distribution valves, by movement of wheels at a gauge change section. Accordingly, there is an excellent effect that it possible to connect and simultaneously drive cars for different gauges without connecting an additional locomotive, and to automatically supply a braking pneumatic pressure suitable for braking systems that are applied in different ways in accordance with gauges even without stopping railroad cars.

### Description of Drawings

FIG. 1 is a view showing an automatic gauge-adjustable wheelset of the related art;
FIG. 2 is a view conceptually showing a braking system for a railroad car of the related art;
FIG. 3 is a conceptually showing a braking system for a railroad car according to the present disclosure;
FIGS. 4 and 5 are views showing in detail an embodiment of the first controller of the present disclosure shown in FIG. 3;
FIG. 6 is a view showing an installation state of the switch of the present disclosure shown in FIG. 4;
FIG. 7 is a view showing in detail the installation state of the conversion member of the present disclosure shown in FIG. 4; and
FIG. 8 is a view showing another embodiment of the braking system for a railroad vehicle according to the present disclosure.

### Best Mode

Hereinafter, exemplary embodiments of the present invention will be described in detail with reference to the accompanying drawings. Like reference numerals are given to like components in the drawings and repetitive description of the like components is not provided. Further, it should be understood that the present solution may be achieved in several different ways and is not limited to the embodiments described herein.

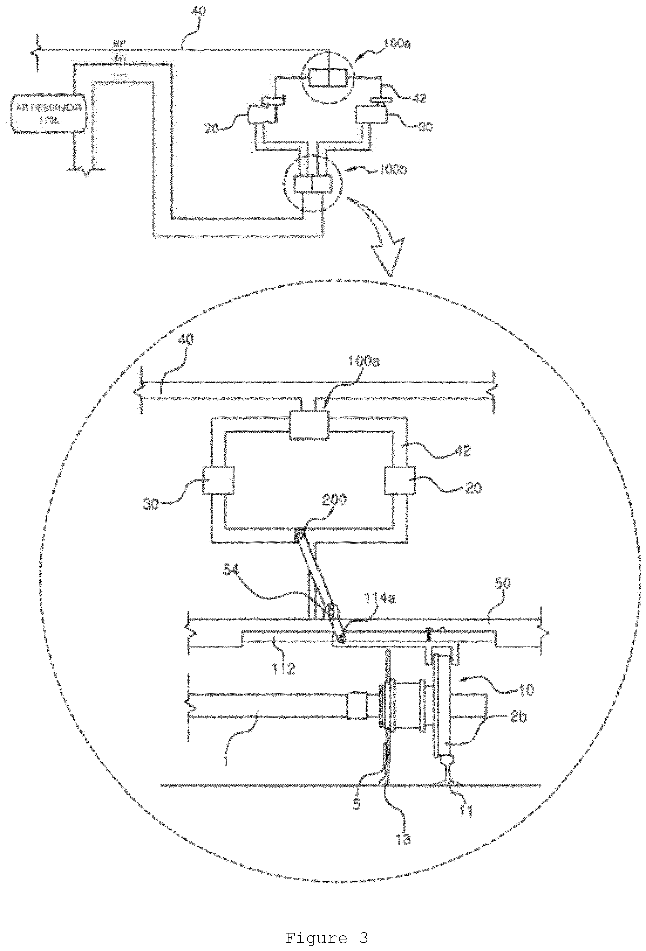

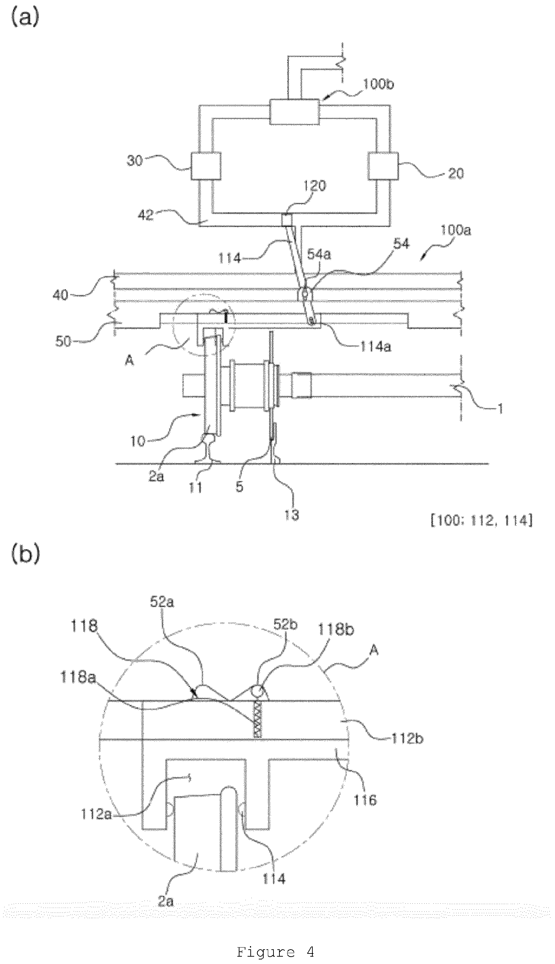

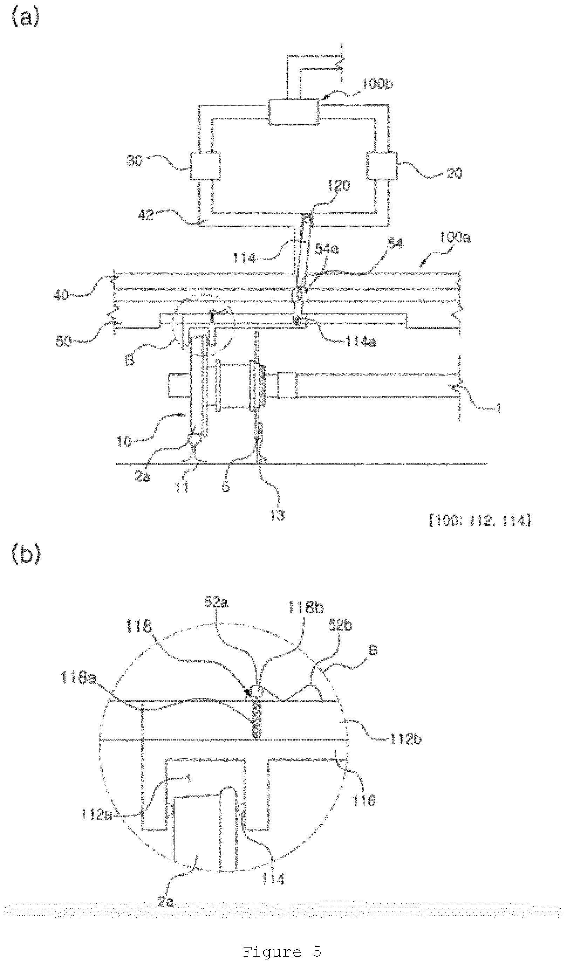

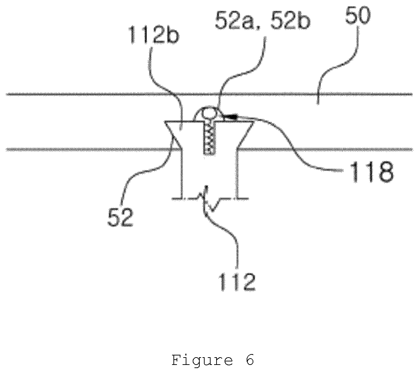

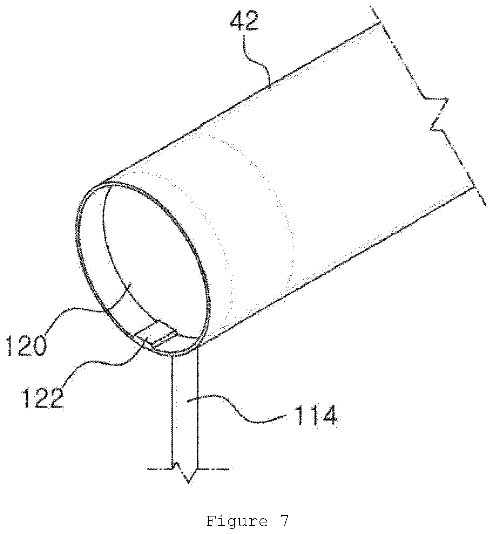

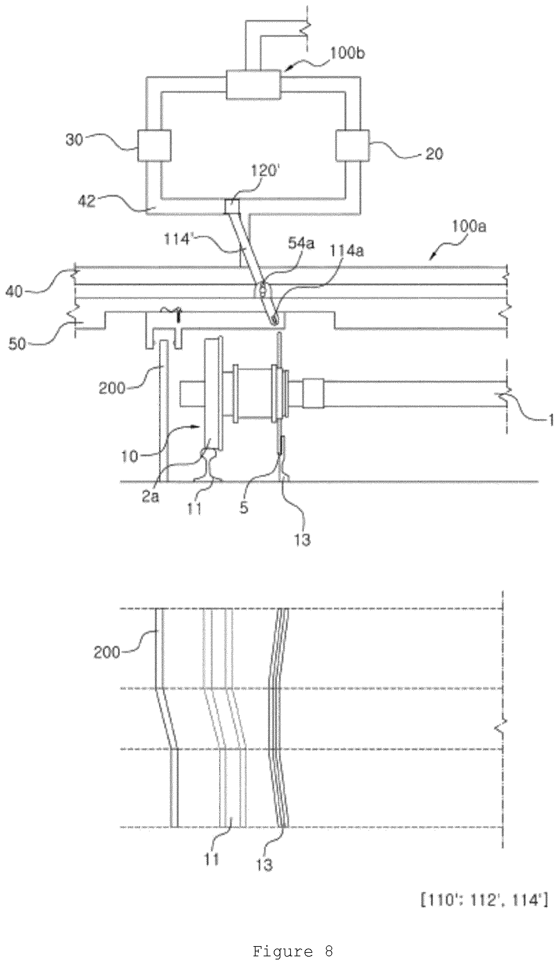

FIG. 3 is a conceptually showing a braking system for a railroad car according to the present disclosure, FIGS. 4 and 5 are views showing in detail an embodiment of the first controller of the present disclosure shown in FIG. 3, FIG. 6 is a view showing an installation state of the switch of the present disclosure shown in FIG. 4, FIG. 7 is a view showing in detail the installation state of the conversion member of the present disclosure shown in FIG. 4, and FIG. 8 is a view showing another embodiment of the braking system for a railroad car according to the present disclosure.

The present invention relates to a braking system for a railroad car, the braking system including both standard gauge and broad gauge distribution valves that are different types and, and being able to automatically supply a braking pneumatic pressure, which is suitable for braking systems that are applied in different ways in accordance with gauges, without stopping railroad cars by switching a braking pneumatic pressure such that the braking pneumatic pressure is supplied to a distribution valve, which is used for a corresponding gauge of the different types of distribution valves, by movement of wheels at a gauge change section. The configuration, as shown in FIG. 3, may include a braking system including first and second distribution valves 20 and 30, and a gauge-adjustable device 10.

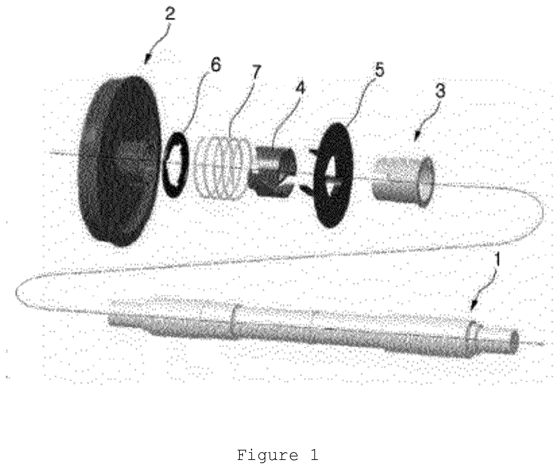

The gauge-adjustable device 10, which is disposed on a wheel axle of a railroad car and is operated by a flange 5 that is pressed by an unlocking rail 13 installed on the railroad of a gauge change section so that the gap between wheels 2 at both ends of an axle can be adjusted to correspond to a gauge, as shown in FIG. 1, may include a fixed cap 3, a locking device 4, a flange 5, a spring holder 6, and a compression spring 7. The detailed configuration of the gauge-adjustable device 10 is not the subject to be claimed in the present application and has been already disclosed in Korean Patent No. 10-0614613, etc., so it is not described in detail.

A pneumatic braking system mounted on railroad cars, as described above, generally, may include: an air compressor, a main air tank, and a braking valve that are mounted on a locomotive; a braking pipe 40 connected to each car connected to the locomotive from the main air tank; an auxiliary air tank 44 mounted on each car; a distribution valve connected between the braking pipe 40 and the auxiliary air tank 44; a control valve including a load sensor 45 and a variable load valve 46 for controlling air supply from the distribution valve and the auxiliary air tank; a brake including a braking cylinder 47 generating a braking force on each car using pneumatic pressure supplied from the auxiliary air tank 44; etc. As described above, since there is a structural difference between the distribution valve of the braking system for a standard gauge used in Korea, etc. and the distribution valve of the braking system for a broad gauge used in Russia, etc., there are differences in the pneumatic pressure that is generated in braking, the time for reaching the pneumatic pressure, etc.

A more detailed embodiment of the braking system include a distribution valve mounted on a railroad car used for the standard gauge in Korea, etc. and the braking system including a distribution valve mounted on a railroad car used for the broad gauge in Russia, etc. is also not the subject of the present invention so it is not described in more detail.

However, the braking system for a railroad car according to the present invention can be applied to a railroad car including both of the gauge-adjustable device 10 and the pneumatic braking system described above, and is characterized by including both of a distribution valve (hereafter, referred to as a 'first distribution valve' 20) that is included in a braking system used for the standard gauge in Korea, etc. and a distribute valve (hereafter, referred to as a 'second distribution valve' 30) that is different in configuration from the first distribution valve 20, that is, is included in a braking system used for the broad range in Russia, etc.

That is, as shown in FIG. 4 (a), a divergence pipe 42 is installed between a braking pipe 40 connected to each car from a main air tank of a locomotive and an auxiliary air tan 44 mounted on each car, and the first distribution valve 20 and the second distribution valve 30 are installed at both sides of the divergence pipe 42, respectively. Accordingly, the air that is supplied through the braking pipe 40 can be selectively supplied and discharged to the first distribution valve 20 or the second distribution valve 30.

In more detail, the air that is supplied from the braking pipe 40, that is, a braking pneumatic pressure is supplied to the auxiliary air tank 44 through the first distribution valve 20 when a railroad car is driven on a standard-gauge railroad, and the braking pneumatic pressure that is supplied from the braking pipe 40 is supplied to the auxiliary air tank 44 through the second distribution valve 30 when a railroad car is driven on a broad-gauge railroad.

A controller 100 may be used to control the supply direction of the braking pneumatic pressure. The controller 100 may be configured to operate in response to movement of the wheels 2 that are moved by the gauge-adjustable device 10.

That is, as described above, when a flange 5 is pressed and moved toward an axle 1 by an unlocking rail 13 installed on a railroad in a gauge change section, the gauge-adjustable device 10 locks or unlocks the wheels 2, thereby being able to adjust the gap between the wheels 2 at both sides. When the wheels 2 are unlocked and moved by operation of the gauge-adjustable device 10 in a gauge change section, the controller 100 may be operated by the movement of the wheels 2 such that the braking pneumatic pressure from the braking pipe 40 is selectively supplied and discharged to the first distribution valve 20 or the second distribution valve 30 disposed at both sides of the divergence pipe 42, respectively.

The controller 100 may include first and second controllers 100a and 100b. The first controller 100a may be disposed between a first wheel 2a of both wheels of a railroad car and inlets of the first and second distribution valves 20 and 30 to selectively block the divergence pipe 42 connected between the braking pipe 40 and the first and second distribution valves 20 and 30. The second controller 100b may be disposed between a second wheel 2b of both wheels of a railroad car and outlets of the first and second distribution valves 20 and 30 to selectively block the divergence pipe 42 connected between the first and second distribution valves 20 and 30 and the auxiliary air tank 44.

That is, though it will be described below, when a railroad car is driven on a standard-gauge railroad, the first controller 100a blocks the divergence pipe 42 at the inlet of the second distribution valve 30 such that the braking pneumatic pressure that is supplied from the braking pipe 40 can be supplied toward the first distribution valve 20. Further, in this case, the second controller 100b blocks the divergence pipe 42 at the outlet of the second distribution valve 30, thereby being able to prevent the braking pneumatic pressure that is supplied to the auxiliary air tank 40 through the first distribution valve 20 from flowing backward toward the second distribution valve 30.

When the railroad on which a railroad car is driven, that is, a rail 11 is changed from the standard gauge to the broad gauge, both wheels 2a and 2b are moved by the gauge-adjustable device 10 and the first and second controllers 100a and 100b are operated, thereby blocking the divergence pipe 42 at the inlet of the first distribution valve 20 and the divergence pipe 42 at the outlet of the first distribution valve 20, respectively. Accordingly, the braking pneumatic pressure that is supplied from the braking pipe 40 can be supplied to the auxiliary air tank 44 through the second distribution valve 30.

Hereafter, the detailed configuration and operation relationship of the controller 100 are described in more detail with reference to the accompanying drawings.

The second controller 100b of the first and second controllers 100a and 100b is the same in detailed configuration and operation relationship as the first controller 100a to be described below except that it is connected between the second wheel 2b of both wheels 2 of a railroad car and the outlets of the first and second distribution valves 20. Accordingly, only the first controller 100a is described hereafter.

The first controller 100a, as described above, is connected between the first wheel 2a of both wheels 2 of a railroad car and the divergence pipe 42 disposed at the inlets of the first and second distribution valves 20 and 30, and may include a switch unit 110 and a conversion member 120.

In more detail, the switch 110, which is disposed on a car frame 40 and is operated in response to movement of the first wheel 2a that is moved by the gauge-adjustable device 10, may include a switch 112 and a link 114.

First, the switch 112 is disposed on a car frame 50 and is moved toward the axle 1, that is, in the same direction as movement of the first wheel 2a when the first wheel 2a is moved by the gauge-adjustable device 10 in a gauge change section. An insertion groove 112a in which the upper end is inserted is formed on the bottom of a side of the switch 112. When the wheel 2a is moved toward the axle 1 in a gauge change section, a side of the upper end of the wheel 2a comes in contact with the inner surface of the insertion groove 112a of the switch 112 and presses the switch 112, thereby being able to move the switch 112 toward the axle 1.

Bearings116 may be disposed on both sides of the insertion groove 112a and minimize friction when both sides of the wheel 2a come in contact with the insertion groove 112a, thereby reducing wear and noise of the wheel 2a.

As shown in FIG. 6, a guide 112b having a dove tail shape may protrude from the top of the switch 112 and a guide groove 52 in which the guide 112b is inserted may be formed on the bottom of the car frame 50 in a shape corresponding to the guide 112b.

That is, the guide groove 52 is formed toward the axle on the bottom of the car frame 50, and supports the guide groove 112b on the top of the switch 112 and guides the switch 112 such that the switch 112 can be accurately moved toward the axle 1 without fluctuation, that is shaking when the wheel 2a is moved.

First and second seats 52a and 52b spaced a predetermined distance from each other may be formed in the guide groove 52 of the car frame 50 and a ball plunger 118 that is selectively inserted into the first and second seats 52a and 52b may be disposed on the guide 112b of the switch 112. The first and second seats 52a and 52b and the ball plunger 118 are provided so that the switch 112 is fixed not in contact with the wheel 2a after the wheel 2a is converted to be fitted a gauge, that is, after the switch 112 is moved by the wheel 2a.

In more detail, as shown in FIGS. 4(b) and 5(b), the first seat 52a can be used to fix the switch 112 when a railroad is driven on a broad-gauge rail and the second seat 52b can be used to fix the switch 112 when a railroad car is driven on a standard-gauge road. The first and second seats 52a and 52b may have smooth slopes on the sides in entry direction of the switch 112.

The ball plunger 118 on the top of the guide 112b is positioned on the smooth slope of the first seat 52a or the second seat 52b when the switch 112 finishes being moved by the wheel 2a.

This is for preventing contact between both sides of the wheel 2a and the inner side of the insertion groove 11a or the bearing 116 when the switch 112 finishes being moved by the wheel 2a. When the switch 112 finishes being moved by movement of the wheel 2a and the ball plunger 118 is positioned on the smooth slope of the first seat 52a or the second seat 52b, a ball 118b of the ball plunger 118 is moved toward the center of the first seat 52a or the second seat 52b, that is, the most recessed portion by the elasticity of a spring 118a of the ball plunger 118.

Accordingly, the switch 112 is further moved in the movement direction after it finishes being moved by the wheel 2a, that is, a side of the wheel 2a and the inner surface of the insertion groove 112a or the bearing 116 are in contact with each other, so a space is formed between both sides of the wheel 2a and the inner surface of the insertion groove 112a or the bearing 116, whereby it is possible to prevent contact between the side of the wheel 2a and the inner surface of the insertion groove 112a or the bearing 116.

The link 114 is connected between the switch 112 and the conversion member 120 to change the position of the conversion member 120 when the switch 112 is moved by movement of the wheel 2a. A first end of the link 114 may be hinged to the switch 112 and a second end of the link 114 may be connected to the conversion member 120.

A hinge-coupling portion 54 for supporting the link 44 may be formed at the car frame 50. Accordingly, when the switch 112 is moved toward the axle 1, the link 114 pivots on the hinge-coupling portion 54.

A hinge hole 114a for hinge-coupling to the switch 112 is formed at the first end of the link 114. The hinge hole 114a and the hinge hole 54a formed at the hinge-coupling portion 54 are both formed in an oblong shape elongated up and down to allow for a displacement difference due to pivoting of the link 114.

When the link 114 pivots on the hinge-coupling portion 54 by movement of the switch 112, both ends of the link 114 are supposed not to move straight but to curve in an arc shape. In order that both ends of the link 114 curve, the heights of both ends of the link 114 should be changed.

However, the second end of the link 114 is connected to the conversion member 120 to be described below and the conversion member 120 is inserted in the divergence pipe 42 to move while closing the divergence pipe 42. Accordingly, the conversion member 120 can move only straightly and cannot move in a curve which requires a height change.

Accordingly, the oblong hinge holes 114a and 54a elongated up and down are formed at the first end of the link 114 that is connected to the switch 112 and the hinge-coupling portion 54 of the car frame 50 that supports the middle portion of the link 114. Therefore, a height change can be allowed when the link 114 pivots on the hinge-coupling portion 54.

The conversion member 120, which is connected to the switch unit 110 to be able to supply a braking pneumatic pressure to any one of the first and second distribution valves 20 and 30, may be connected to the second end of the link 114.

In more detail, the conversion member 120 is inserted in the divergence pipe 42, which is supplied with a braking pneumatic pressure from the braking pipe, 40 to block the braking pneumatic pressure that is supplied through the divergence pipe 42, and has the same size as the inner diameter as the divergence pipe 42, that is, the same size and shape as the internal cross-section of the divergence pipe 42.

That is, as shown in FIG. 4(a), when a railroad vehicle is driven on a standard-gauge rail, the diverging pipe 42 is blocked toward the second distribution valve 30 by the conversion member 120, so a braking pneumatic pressure is supplied toward the first distribution valve 20 from the braking pipe 40. Accordingly, a braking system for the standard gauge can be used.

When the railroad on which a railroad car is driven, that is, a rail 1 is changed into a broad-gauge railroad from a standard-gauge railroad, the gauge-adjustable device 10 is operated by the unlocking rail 13 installed in the gauge change section, so the wheel 2a is moved away from the center of the axle 1 on the rail 11. Further, the switch 112 also moved away from the center of the axle 1 by the movement of the wheel 2a. Accordingly, the link 114 connected to the switch 112 pivots clockwise on the hinge-coupling portion 54.

As the link 114 pivots, as described above, the conversion member 120 connected to the second end of the link 114, as shown in FIG. 5(a), is moved toward the first distribution valve 20 through the divergence pipe 42, thereby blocking the braking pneumatic pressure that is supplied to the first distribution valve 20. Accordingly, a braking pneumatic pressure is supplied toward the second distribution valve 30 from the braking pipe 40, whereby a braking system for the broad gauge can be used.

Meanwhile, as shown in FIG. 7, a sealing member 122 may be integrated with the conversion member 120. The sealing member 122 is provided to prevent barking air, which is supplied into the divergence pipe 42, from leaking outside at the joint between the link 114 and the conversion member 120.

That is, the conversion member 120 disposed in the divergence pipe 42 should be moved toward the first distribution valve 20 or the second distribution valve 30 by the link 114 pivoted by movement of the wheel 2a while keeping connected to the link 114. Accordingly, a hole such as a slit (not shown) enabling connection between the link 114 and the conversion member 120 should be formed on the bottom or a side of the divergence pipe 42.

When a slit is formed at the divergence pipe 42, air may leak through the slit. Accordingly, a sealing 122 having an area larger than the slit is integrally formed on the bottom of a side of the conversion member 120 so that leakage of a braking pneumatic pressure through the slit can be prevented even though the conversion member 120 is moved through the divergence pipe 42 by pivoting of the link 114.

Though not shown, the sealing member having the function described above may be disposed not inside, but outside the divergence pipe 42 and integrally formed at the upper end of the link 114, and may be integrally coupled to the conversion member 120 through a hole such as a slit formed at the divergence pipe 42, thereby being able to prevent leakage of a braking pneumatic pressure from the divergence pipe 42. Since there is provided the sealing member 122 elongated larger than the length of the slit and being able to cover the slit (not shown) even though the conversion member 200 is moved, it is possible to prevent leakage of the braking pneumatic pressure that is supplied to the divergence pipe 42.

Meanwhile, according to another embodiment of the braking system for a railroad car of the present invention, a controller 100' for controlling supply and discharge of a braking pneumatic pressure to and from the first or second distribution valve 20 or 30 may be configured to be operated by a specific component without operating with movement of the wheels 2. The controller 100' of this embodiment may also be composed of: a first controller 100a connected to the inlets of the first and second distribution valves 20 and 30 and selectively blocking the divergence pipe 42 connected between the braking pipe 40 and the first and second distribution valves 20 and 30; and a second controller 100b connected to the outlets of the first and second distribution valves 20 and 30 and selectively blocking the divergence pipe 42 connected between the first and second distribution valves 20 and 30 and the auxiliary air tank 44.

The first and second controllers 100a and 100b are the same in detailed configuration and operation relationship as those of the previous embodiment except for only the installation position. Accordingly, the first and second controllers 100a and 100b are, in combination, referred to as the controller 100'.

The controller 100' of this embodiment, as shown in FIG. 8, may include a guide rail 200, a switch unit 110', and a conversion member 120'.

In more detail, the guide rail 200, which is installed on a railroad in a gauge change section, may be installed outside a rail 11 in parallel with the rail 11. Although only one rail 11 and one guide rail 200 are shown in FIG. 8, the guide rail 200 may be installed outside the opposite rail. A component including the guide rail 200 shown in FIG. 8 may be the first controller 100a and a component including the opposite guide rail not shown may be the second controller 100b.

That is, the guide rail 200 may be installed in parallel with rails of which the gauge increases as it goes in the driving direction of a railroad car in a gauge change section in which the standard gauge changes into the broad gauge. Further, the guide rail 200 may be installed in parallel with rails 11 which the gauge decreases as it goes in the driving direction of a railroad car in a gauge change section in which the broad gauge changes into the standard gauge.

The switch unit 110' and the conversion member 120' may be the same as those in the previous embodiments, so they are not described in detail.

However, the upper end of the guide rail 200 rather than the wheel 2a is inserted in the insertion groove 112a' of the switch 112' of the switch unit 110' and the switch 112' changes the positions of the link 141' and the conversion member 120' connected to the link 114' while being guided to move toward the axle 1 by the guide rail 200, whereby a braking pneumatic pressure can be controlled to be supplied and discharged to the first or second distribution valve 20 or 30.

that is, when the railroads on which a railroad car is driven, that is, the rails 11 are changed from a standard-gauge rail to a broad-gauge rail, the switch 121' is moved away from the center of the axle 1 by the guide rails 200 installed in parallel with the rails11 installed in the gauge change section and the links 114' of the first and second controllers 100a and 100b connected to the switch 112' pivot clockwise and counterclockwise on the hinge-coupling portion 54, respectively.

The conversion member 120' connected to the second ends of the links 114' is moved toward the first distribution valve 20 through the divergence pipe 42 by pivoting of the links 114' and the conversion member 120' of the first controller 100a installed at the inlet of the divergence pipe 42 blocks a braking pneumatic pressure that is supplied to the first distribution valve 20. Accordingly, the braking pneumatic pressure supplied from the braking pipe 40 can be supplied toward the second distribution valve 30.

The conversion member (not shown) of the second controller 100b installed at the outlet of the divergence pipe 42 enables the braking pneumatic pressure discharged from the second distribution valve 30 to be supplied toward the auxiliary air tank 44 and prevents the braking pneumatic pressure from flowing back toward the first distribution 20, so a braking system for the broad gauge can be used.

Meanwhile, when a railroad car is driven in a curved section, rotation may occur between the vehicle and the car body for smooth driving. In this case, since the controllers 100 and 100' are installed on the vehicle in the present embodiment and the braking system including the braking pipe 40, the divergence pipe 42, etc. is usually installed on a car body, there is no possibility of damage to the links 114 and 114' of the controllers 100 and 100', the divergence pipe 42 of the braking system, of the like when rotation occurs between a vehicle and a car body.

Accordingly, the divergence pipe 42 to which the controllers 100 and 100' may be made of an elastic material such as rubber to prevent damage to the links 114 and 114', the divergence pipe 42, or the like even a displacement different is generated due to rotation between a vehicle and a car body when a railroad car is driven in a curved section.

For reference, a gauge change section does not exist in a curved section and exists only in a straight section, so there is no case that the controllers 100 and 100' are not operated in a curved section.

Therefore, according to the braking system for a railroad car of the present disclosure described above, the braking system includes both standard gauge and broad gauge distribution valves that are different types and converts a braking pneumatic pressure such that the braking pneumatic pressure is supplied to a distribution valve, which is used for a corresponding gauge of the two types of distribution valves, by movement of wheels at a gauge change section. Accordingly, it possible to connect and simultaneously drive cars for different gauges without connecting an additional locomotive, and to automatically supply a braking pneumatic pressure suitable for braking systems that are applied in different ways in accordance with gauges even without stopping railroad cars. That is, the braking system has various advantages.

## Claims

1. A braking system for a railroad car including a gauge-adjustable device (10) being able to change positions of wheels (2) at both sides through an unlocking rail (13) and a braking system using pneumatic pressure,
**characterized in that** the braking system comprises first and second distribution valves (20, 30) that are different types, and is configured to be able to selectively supply and discharge a braking pneumatic pressure to the first or second distribution valve (20, 30) in accordance with the kind of a gauge of a railroad on which the railroad car is driven.

2. The braking system of claim 1, comprising a controller (100, 100') configured to control supply and discharge of a braking pneumatic pressure to the first or second distribution valve (20, 30),
wherein the controller (100, 100') is operated in response to movement of a wheel (2) in a gauge change section.

3. The braking system of claim 2, wherein the controller (100, 100') includes:
a first controller (100a) disposed between a wheel (2a) of the railroad car and inlets of the first and second distribution valves (20, 30); and
a second controller (100b) disposed between the other wheel (2b) of the railroad car and outlets of the first and second distribution valves (20, 30).

4. The braking system of claim 3, wherein the first and second controllers (100a, 100b) include:
a switch unit (110) mounted on a car frame (50) and operating in response to movement of a wheel (2a) in a gauge change section; and
a conversion member (120) connected to the switch unit (110) and passing a braking pneumatic pressure toward only any one of the first and second distribution valves (20, 30) .

5. The braking system of claim 4, wherein the switch unit (110) includes:
a switch (112) disposed on the car frame (50) and being moved toward an axle by movement of the wheel (2a) in a gauge change section; and
a link (114) having an end connected to the switch (112) and another end connected to the conversion member (120) .

6. The braking system of claim 5, wherein an insertion groove (112a) in which an upper end of a wheel (2a) is inserted is formed in the switch (112), and
bearings (116) being in contact with both sides of the wheel (2a) are disposed on both sides of the insertion groove (112a).

7. The braking system of claim 5, wherein a dove tail-shaped guide protrudes from a top of the switch (112), and a guide groove (52) in which the guide is inserted is formed on the car frame (50) toward an axle.

8. The braking system of claim 5, wherein the car frame (50) has a hinge-coupling portion (54) supporting the link (114).

9. The braking system of claim 4, wherein the conversion member (120) is moved through a divergence pipe (42) diverging to the first and second distribution valves (20, 30) from a main air pipe of the braking system by operation of the switch unit (110) to selectively open and close the divergence pipe (42) connected to the first or second distribution valve (20, 30).

10. The braking system of claim 3, wherein the first and second controllers (110a, 100b) include:
a guide rail (200) fixed to a railroad of a gauge change section;
a switch unit (110') disposed on a car frame (50) and guided toward an axle by the guide rail (200); and
a conversion member (120') connected to the switch unit (110') to pass a braking pneumatic pressure toward only one of the first and second distribution valves (20, 30) .

## Patentansprüche

1. Bremssystem für ein Schienenfahrzeug mit einer spurweitenverstellbaren Vorrichtung (10), die in der Lage ist, Positionen von Rädern (2) an beiden Seiten durch eine Entriegelungsschiene (13) zu verändern, und einem Bremssystem, das pneumatischen Druck verwendet,
**dadurch gekennzeichnet, dass** das Bremssystem ein erstes und ein zweites Verteilungsventil (20, 30) aufweist, die unterschiedlicher Art sind, und so konfiguriert ist, dass es in der Lage ist, dem ersten oder dem zweiten Verteilungsventil (20, 30) selektiv einen pneumatischen Bremsdruck zuzuführen und abzulassen, in Übereinstimmung mit der Art einer Spurweite eines Schienenwegs, auf dem das Schienenfahrzeug gefahren wird.

2. Bremssystem nach Anspruch 1, das eine Steuerung (100, 100') aufweist, die so konfiguriert ist, dass sie Zufuhr und Ablass eines pneumatischen Bremsdrucks an das erste oder das zweite Verteilungsventil (20, 30) steuert,
wobei die Steuerung (100, 100') in Reaktion auf eine Bewegung eines Rades (2) in einem Spurweitenänderungsabschnitt betrieben wird.

3. Bremssystem nach Anspruch 2, wobei die Steuerung (100, 100') aufweist:
eine erste Steuerung (100a), die zwischen einem Rad (2a) des Schienenfahrzeugs und Einlässen des ersten und des zweiten Verteilungsventils (20, 30) angeordnet ist; und
eine zweite Steuerung (100b), die zwischen dem anderen Rad (2b) des Schienenfahrzeugs und Auslässen des ersten und zweiten Verteilungsventils (20, 30) angeordnet ist.

4. Bremssystem nach Anspruch 3, wobei die erste und die zweite Steuerung (100a, 100b) aufweisen:
eine Schalteinheit (110), die an einem Wagenrahmen (50) angebracht ist und in Reaktion auf eine Bewegung eines Rades (2a) in einem Spurweitenänderungsabschnitt arbeitet; und
ein Umwandlungselement (120), das mit der Schalteinheit (110) verbunden ist und einen pneumatischen Bremsdruck zu nur einem des ersten und des zweiten Verteilungsventils (20, 30) leitet.

5. Bremssystem nach Anspruch 4, wobei die Schalteinheit (110) aufweist:
einen Schalter (112), der an dem Wagenrahmen (50) angeordnet ist und durch eine Bewegung des Rades (2a) in einem Spurweitenänderungsabschnitt in Richtung einer Achse bewegt wird; und
ein Verbindungsglied (114) mit einem Ende, das mit dem Schalter (112) verbunden ist, und einem anderen Ende, das mit dem Umwandlungselement (120) verbunden ist.

6. Bremssystem nach Anspruch 5, wobei in dem Schalter (112) eine Einführungsnut (112a) ausgebildet ist, in die ein oberes Ende eines Rades (2a) eingeführt ist, und
Lager (116), die mit beiden Seiten des Rades (2a) in Kontakt sind, an beiden Seiten der Einführungsnut (112a) angeordnet sind.

7. Bremssystem nach Anspruch 5, wobei eine schwalbenschwanzförmige Führung von einer Oberseite des Schalters (112) vorsteht und eine Führungsnut (52), in die die Führung eingesetzt ist, an dem Fahrzeugrahmen (50) in Richtung einer Achse ausgebildet ist.

8. Bremssystem nach Anspruch 5, wobei der Wagenrahmen (50) einen Scharnier-Kopplungsabschnitt (54) aufweist, der das Verbindungsglied (114) trägt.

9. Bremssystem nach Anspruch 4, wobei das Umwandlungselement (120) mittels Betriebs der Schalteinheit (110) durch eine Abzweigungsleitung (42), die von einer Hauptluftleitung des Bremssystems zu dem ersten und dem zweiten Verteilungsventil (20, 30) abzweigt, bewegt wird, um die mit dem ersten oder dem zweiten Verteilungsventil (20, 30) verbundene Abzweigungsleitung (42) selektiv zu öffnen und zu schließen.

10. Bremssystem nach Anspruch 3, wobei die erste und die zweite Steuerung (110a, 100b) aufweisen:
eine Führungsschiene (200), die an einem Schienenweg eines Spurweitenänderungsabschnitts befestigt ist;
eine Schalteinheit (110'), die an einem Wagenrahmen (50) angeordnet ist und von der Führungsschiene (200) zu einer Achse geführt wird; und
ein Umwandlungselement (120'), das mit der Schalteinheit (110') verbunden ist, um einen pneumatischen Bremsdruck zu nur einem des ersten und des zweiten Verteilungsventils (20, 30) zu leiten.

## Revendications

1. Système de freinage pour un wagon de chemin de fer comprenant un dispositif à réglage d'écartement de voie (10) pouvant changer les positions des roues (2) des deux côtés par l'intermédiaire d'un rail de déverrouillage (13) et d'un système de freinage utilisant une pression pneumatique,
**caractérisé en ce que** le système de freinage comprend des première et seconde vannes de répartition (20, 30) qui sont de types différents, et est configuré pour pouvoir fournir et décharger sélectivement une pression pneumatique de freinage à la première ou à la seconde vanne de répartition (20, 30) en fonction du type d'écartement de voie d'un chemin de fer sur lequel le wagon de chemin de fer est entraîné.

2. Système de freinage selon la revendication 1, comprenant un contrôleur (100, 100') configuré pour contrôler l'alimentation et la décharge d'une pression pneumatique de freinage vers la première ou la seconde vanne de répartition (20, 30),
dans lequel le contrôleur (100, 100') est actionné en réponse au mouvement d'une roue (2) dans une section de changement d'écartement de voie.

3. Système de freinage selon la revendication 2, dans lequel le contrôleur (100, 100') comprend :
un premier contrôleur (100a) disposé entre une roue (2a) du wagon de chemin de fer et les entrées des première et seconde vannes de répartition (20, 30) ; et
un second contrôleur (100b) disposé entre l'autre roue (2b) du wagon de chemin de fer et les sorties des première et seconde vannes de répartition (20, 30).

4. Système de freinage selon la revendication 3, dans lequel les premier et second contrôleurs (100a, 100b) comprennent :
une unité de commutation (110) montée sur un châssis de wagon (50) et fonctionnant en réponse au mouvement d'une roue (2a) dans une section de changement d'écartement de voie ; et
un élément de conversion (120) relié à l'unité de commutation (110) et faisant passer une pression pneumatique de freinage vers seulement l'une quelconque des première et seconde vannes de répartition (20, 30).

5. Système de freinage selon la revendication 4, dans lequel le dispositif de commutation (110) comprend :
un commutateur (112) disposé sur le châssis de wagon (50) et étant déplacé vers un essieu par le mouvement de la roue (2a) dans une section de changement d'écartement de voie ; et
une liaison (114) ayant une extrémité reliée au commutateur (112) et une autre extrémité reliée à l'élément de conversion (120).

6. Système de freinage selon la revendication 5, dans lequel une rainure d'insertion (112a) dans laquelle une extrémité supérieure d'une roue (2a) est insérée est formée dans le commutateur (112), et
des paliers (116) qui sont en contact avec les deux côtés de la roue (2a) sont disposés des deux côtés de la rainure d'insertion (112a).

7. Système de freinage selon la revendication 5, dans lequel un guide en forme de queue d'aronde fait saillie à partir d'un sommet du commutateur (112), et une rainure de guidage (52) dans laquelle le guide est inséré est formée sur le châssis de wagon (50) vers un essieu.

8. Système de freinage selon la revendication 5, dans lequel le châssis de wagon (50) comporte une partie d'accouplement d'articulation (54) supportant la liaison (114).

9. Système de freinage selon la revendication 4, dans lequel l'élément de conversion (120) est déplacé à travers un tuyau de divergence (42) divergeant vers les première et seconde vannes de répartition (20, 30) à partir d'un tuyau d'air principal du système de freinage par l'actionnement de l'unité de commutation (110) pour ouvrir et fermer sélectivement le tuyau de divergence (42) relié à la première ou à la seconde vanne de répartition (20, 30).

10. Système de freinage selon la revendication 3, dans lequel les premier et second contrôleurs (110a, 100b) comprennent :
un rail de guidage (200) fixé à un chemin de fer d'une section de changement d'écartement de voie ;
une unité de commutation (110') disposée sur un châssis de wagon (50) et guidée vers un essieu par le rail de guidage (200) ; et un élément de conversion (120') relié à l'unité de commutation (110') pour faire passer une pression pneumatique de freinage vers une seule des première et seconde vannes de répartition (20, 30).
